(19) Europäisches Patentamt
European Patent Office
Office européen des brevets

(11) EP 4 738 635 A1

(12) EUROPEAN PATENT APPLICATION

(43) Date of publication:
06.05.2026 Bulletin 2026/19

(21) Application number: 24210043.6

(22) Date of filing: 31.10.2024

(51) International Patent Classification (IPC):
H02J 1/14 (2026.01)          C25B 1/04 (2021.01)
C25B 15/02 (2021.01)         H02J 3/14 (2026.01)
H02J 4/00 (2026.01)          H02J 15/00 (2026.01)
H02J 3/00 (2026.01)

(52) Cooperative Patent Classification (CPC):
H02J 3/14; C25B 1/04; C25B 15/02; H02J 1/14;
H02J 3/001; H02J 4/00; H02J 15/50

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Energy Global GmbH & Co.
KG
81739 München (DE)

(72) Inventors:
• Schumann, Sven
91452 Wilhermsdorf (DE)

• Buratckii, Artem
90459 Nürnberg (DE)
• Langenberg, Nils
90461 Nürnberg (DE)
• Bendig, Marvin
90513 Zirndorf (DE)
• Wall, Dirk
45475 Mülheim (DE)
• Craciun, Bogdan
91052 Erlangen (DE)
• Loku, Fisnik
90439 Nürnberg (DE)

(54) **CONTROLLING AN ELECTROLYZING PLANT HAVING AT LEAST TWO ELECTROLYZING DEVICES**

(57) The invention relates to a method for controlling an electrolyzing plant (10) having at least two electrolyzing devices (14, 16, 32, 38), wherein the electrolyzing plant is supplied with electric energy from an electric power network (12), wherein the electric power network provides an alternating voltage having a basic frequency, wherein an AC side of an electric converter (20, 22, 24, 26) is electrically connected with the electric power network, and a DC side of the electric converter provides a DC electrolyzing voltage.

According to the invention, a sensed frequency of the basic frequency is compared with a predetermined frequency range (76), and, depending on comparing, an operating status of the at least two electrolyzing devices is stored if the basic frequency leaves the predetermined frequency range, in order to allow the operation of the respective one of the at least two electrolyzing devices being resumed.

FIG 3

**Description**

The invention relates to a method for controlling an electrolyzing plant having at least two electrolyzing devices, especially configured to electrolyze water by providing an electrolyzing process, wherein the at least two electrolyzing devices perform the electrolyzing process in response to being subjected to a DC electrolyzing voltage, wherein the electrolyzing plant is supplied with electric energy from an electric power network, wherein the electric power network provides an alternating voltage having a basic frequency, wherein an AC side of at least one electric converter of the electrolyzing plant is electrically connected with the electric power network in order to be subjected to the alternating voltage, and a DC side of at least one electric converter provides the DC electrolyzing voltage in response to the AC side being subjected to the alternating voltage, wherein the basic frequency is sensed by a frequency sensor. The invention also relates to an apparatus for controlling an electrolyzing plant having at least two electrolyzing devices, especially configured to electrolyze water by providing an electrolyzing process, wherein the at least two electrolyzing devices perform the electrolyzing process in response to being subjected to a DC electrolyzing voltage, wherein the electrolyzing plant is supplied with electric energy from an electric power network, wherein the electric power network provides an alternating voltage having a basic frequency, wherein the apparatus is configured to be connected with at least one electric converter of the electrolyzing plant, wherein the at least one electric converter has an AC side which is electrically connected with the electric power network in order to be subjected to the alternating voltage, and a DC side which provides the DC electrolyzing voltage in response to the AC side being subjected to the alternating voltage, wherein the apparatus is configured to be connected with a frequency sensor for sensing the basic frequency.

Methods for controlling electrolyzing plants, for instance, for producing hydrogen and oxygen by electrolyzing of water in an electrolyzing process, apparatuses for controlling electrolyzing plants, and electrolyzing plants are well known in the state of the art, which is why specific references about the state of the art need not to be cited. The invention relates to objects providing an electrolyzing process, which are used, for example, for producing hydrogen and oxygen by electrolyzing of water. The following considerations can be also applied to such electrolyzing processes, respectively.

Electrolysis itself is provided by the at least two electrolyzing devices of the electrolyzing plant, which, in turn, comprise usually plural electrolyzing cells arranged in the at least two electrolyzing devices. A group of the electrolyzing cells of a specific electrolyzing device may be arranged such as to form an electrolyzing module. One or more electrolyzing modules may form the electrolyzing device.

The electrolyzing cells of a specific electrolyzing device or a specific electrolyzing module, respectively, may be electrically connected at least partially in series and/or in parallel. An electric connection of the electrolyzing device may be provided such that at least some, or perhaps all, of the electrolyzing cells are subjected to a respective portion of a DC voltage or the DC electrolyzing voltage, respectively, subjected to the electrolyzing device. The operation of generic electrolyzing cells as well as electrolyzing devices, for instance, for the use of electrolyzing of water, are well-known to those skilled in the art, such as, for instance, disclosed by DE 197 29 529 C1. The generic function of electrolysis, especially electrolysis of water, is also well known to those skilled in the art, which is why it is refrained from further detailed explanation in this specification.

An electrolyzing device has at least one single electrolyzing cell. However, a common design of an electrolyzing device requires that the specific electrolyzing device has a plurality of electrolyzing cells. During the electrolyzing process, when the electrolyzing device is subjected to the suited DC electrolyzing voltage, the electrolyzing device responds with an electrolyzing DC current flow. Especially with regard to the electrolyzing of water, during the electrolyzing process, water is consumed, and hydrogen and oxygen are produced. A value of the DC electrolyzing voltage usually may depend on the number of electrolyzing cells being connected in series inside of the at least one electrolyzing device. Generally, the electrolyzing cells of one electrolyzing device are usually connected in series. Therefore, the DC current flow may depend on the applied DC voltage and the characteristics of the electrolyzing cells such as, for instance, electrical resistance, electrical impedance, aging and/or the like, of the series-connected electrolyzing cells. However, in some exemplary embodiments having a different design, the electrolyzing DC current flow may also depend on a number of electrolyzing cells being connected in parallel if applicable and/or a specific design of each of the electrolyzing cells.

Usually, an electrolyzing plant requires a respective high-power power supply during the electrolyzing process. For this purpose, the electrolyzing plant may have a point of connection (PoC), wherein, at the point of connection, the electrolyzing plant is electrically connected with the electric power network. It should be considered that the conditions for establishing the electrolyzing process by the electrolyzing devices of the electrolyzing plant are not easy to manage which is why it is usually an intention of an operator of the electrolyzing plant to maintain a specific processing condition and to avoid large amendments of this condition. Therefore, controlling the electrolyzing process of the electrolyzing devices in order to support stability of the electric power network should consider these requirements for supplying the electrolyzing plant with electric energy, on the one hand. Controlling can also be at least partially provided by a respective apparatus. On the other hand, network requirements of the electric power network need to be also considered, such as, for example, harmonics, power factor, low voltage condition, high voltage condition, frequency deviation, and/or the like.

The electrolyzing plant may have an internal power network, which is connected with the point of connection. Especially, the internal power network may receive electric energy from the electric power network and transmit the electric energy at least to the electrolyzing devices. In this regard, it should be noted that the electrolyzing plant, especially the internal power network, usually has at least one electric converter, for instance, a rectifying device, providing an electrical coupling between the electric power network and the at least two electrolyzing devices. The electrolyzing device needs to be supplied with DC voltage, whereas, usually, the electric power network provides an AC voltage, especially, a three-phase AC voltage. Therefore, the electrolyzing plant has at least one electric converter, which receives the AC voltage and, in response, provides the DC electrolyzing voltage. Moreover, the electrolyzing plant may include one or more transformers, in order to transform the AC voltage before rectifying.

For the purpose of rectifying as such, the electric converter may be of the line-commutated type which may have switching elements such as, for example, thyristors, diodes and/or the like, or the electric converter may be of the self-commutated type which may have transistors as switching elements such as, for example, insulated gate bipolar transistors (IGBT), field effect transistors (FET) such as, for instance, metal oxide semiconductor field effect transistors (MOSFET), and/or the like, respectively. The switching elements can be controlled by a control apparatus of the electric converter, in order to adjust a specific electric power to be supplied to the electrolyzing device. The control apparatus can be in communication with the apparatus for controlling the electrolyzing plant.

It should be further considered that the number of installed electrolyzing plants and existing electric power networks continuously increases. With regard to the global warming range, it is preferred to accelerate the production of green hydrogen. Simultaneously, the share of power electronic based units like renewable energy systems also increases leading to a decrease in grid stability. Consequently, electric power network operators consider defining requirements for the connection of large scale electrolyzing plants in an existing electric power network, in order to ensure a stable grid operation.

Some of such basic requirements, that are defined, relate to the fault-right-through (FRT) requirements, which define operation areas, when an electrolyzing plant needs to stay connected at a respective electric power network, and operation areas when the electrolyzing plant is allowed being disconnected from the electric power network or grid, respectively. Additionally, initial specifications and requirements such as the stability of the basic frequency are defined as well. At least some of such new requirements for load systems further consider requirements for existing photovoltaic farms and wind farms. Additionally, requirements regarding other grid operations are defined. In this regard, frequency stabilizing operations such as a so-called limited frequency sensitive mode (LFSM) are provided requiring adjustment of active power consumption and/or reactive power. Another grid stabilizing function may be power oscillation damping (POD-P, POD-Q), wherein the active power intake and/or reactive power intake of the electrolyzing plant should be adjusted to counter-act against frequency active and/or reactive power oscillations in the grid.

Usually, the electrolyzing device requires a high DC current, for instance, in a range of about single-digit kA through about low double-digit kA. The situation may become even more serious when considering a trend that most of the countries of the world are replacing existing conventional power plants by renewable energy sources, which further decreases a strength and a stability of the electric power network.

In case of system perturbations of the electric power network, such as, for instance, a voltage drop, a brownout, an overvoltage condition, a frequency deviation, or the like, supporting capabilities for stabilizing the electric power network by photovoltaic farms, wind farms and/or the like may not be sufficient to ensure a stable operation of the electric power network. In this regard, it is considered to provide new requirements for electrolyzing plants.

Moreover, large flexible loads connected to the electric power network, or grid, respectively, in particular electrolyzing plants, may cause a substantial effect on the security and/or stability of the operation of the power supply network, especially, in case that the operation of the electrolyzing plant be not flexible with requirements regarding the operation of the power supply network. For example, during power supply network faults caused by different reasons, the alternating voltage and/or its basic frequency may differ from a rated value. However, the electrolyzing plant shall stay connected and permanent disconnection shall be avoided. Additionally, grid stabilizing measures shall be performed by the electrolyzing systems.

Connecting large electrolyzing plants to a public grid may require compliance with the fulfillment of the local grid code requirements. Part of these requirements - especially for large scale electrolyzing plants - is the support of the grid stability in case a predefined tolerable frequency band is left by under-frequency or over-frequency. Such deviations may be caused by an imbalance in the grid between generation of electric power and electric load. However, important requirements, especially, with regard to the frequency of the alternating voltage of the electric power network will not be sufficiently considered.

In this regard, it is an object of the invention to provide a method, an apparatus, as well as an electrolyzing plant, which may further support stable operation of the electric power network, especially with regard to the basic frequency of the alternating voltage of the electric power network. It is especially an object to improve stable operation of the electric power network with regard to LFSM-U, and LFSM-O functionalities.

As a solution, a method, an apparatus, and an electrolyzing plant according to the independent claims are proposed.

Further exemplary embodiments can be derived from the features of the dependent claims.

With regard to a generic method, it is especially proposed that the sensed frequency is compared with a predetermined frequency range for the basic frequency, wherein the predetermined frequency range is delimited by an upper frequency value and a lower frequency value being smaller than the upper frequency value, and, depending on comparing, an operating status of at least one of the at least two electrolyzing devices is stored if the basic frequency leaves the predetermined frequency range, in order to allow the operation of the respective one of the at least two electrolyzing devices being resumed according to the stored operating status if the basic frequency reaches the predetermined frequency range again.

With regard to a generic apparatus, it is especially proposed that the apparatus is configured to compare the sensed frequency with a predetermined frequency range for the basic frequency, wherein the predetermined frequency range is delimited by an upper frequency value and a lower frequency value being smaller than the upper frequency value, and, depending on comparing, store an operating status of at least one of the at least two electrolyzing devices if the basic frequency leaves the predetermined frequency range, in order to allow the operation of the respective one of the at least two electrolyzing devices being resumed according to the stored operating status if the basic frequency reaches the predetermined frequency range again.

With regard to a generic electrolyzing plant, it is especially proposed that the electrolyzing plant is configured to compare the sensed frequency with a predetermined frequency range for the basic frequency, wherein the predetermined frequency range is delimited by an upper frequency value and a lower frequency value being smaller than the upper frequency value, and, depending on comparing, store an operating status of at least one of the at least two electrolyzing devices if the basic frequency leaves the predetermined frequency range, in order to allow the operation of the respective one of the at least two electrolyzing devices being resumed according to the stored operating status if the basic frequency reaches the predetermined frequency range again.

Especially, the invention is based on the consideration that, by adjusting the load provided by the electrolyzing plant, the electrolyzing plant can help balancing the power in the grid. Specific requirements are currently implemented in upcoming grid codes worldwide. The related function may also be referred to as "Limited Frequency Sensitive Mode" (LFSM), and further subdivided into under-frequency (LFSM-U) and over-frequency support (LFSM-O). In the event, the frequency is becoming too low, there is either a shortage of power generation or an excess of power consumed from the grid, so that the electrolyzing plant should reduce its load. In case the frequency is becoming too high, too much power is supplied to the grid or a shortage of power consumption is present, so the electrolyzing plant should be operated to increase its load. Since these functions should be fast-acting to prevent the grid from collapsing, complicated measures could be applied on plant level and high ramp-rates with regard to controlling the at least two electrolyzing devices may be required. Storing may also include adjusting in order to cope with fast changes during the event and just afterwards, namely, apply control setpoint offsets, stop integrations, or change amplifications of PID controls. Resuming may be provided substantially immediately or with a short delay.

Therefore, grid operators may require load change of any electrolyzing plants according to the deviation. In this regard, it is usual that a dead band or a predetermined frequency range, respectively, is used to limit the number of events requiring actions on the side of the electrolyzing plant. Once the applicable dead band is left, the generation or consumption of power, namely, the electrolyzing process or power supplied to any of the electrolyzing plants, may require changing the load, for instance, according to a curve defined by the grid operator.

Moreover, the invention is based on the consideration that the conventional power plants are replaced by renewable energy sources; consequently, the equivalent grid strength of the electric power network for large loads is decreasing. This situation can lead to situations where the frequency of the alternating voltage of the electric power network can more often be susceptible to changes in the electric power network. Therefore, controllable power consumption units such as an electrolyzing plant may at least partially manipulate the basic frequency of the alternating voltage of the electric power network by adjusting their consumed power. By decreasing the consumed power, the grid frequency can be boosted to higher values. This may correspond to power generating units increasing their power output. Respectively, it may be possible to reduce the frequency of the alternating voltage of the electric power network by increasing the consumed power of the electrolyzing plant, similar to decreasing the power output of power generating units. The required power consumption adjustment may follow a droop control depending on the measured frequency deviation and the current power intake.

These functions may be provided at a point of connection (PoC), which is a connection between the electric power network and the power consumer such as the electrolyzing plant. Usually, the electrolyzing plant comprises at least two, especially plural, electrolyzing arrays as a smallest individually adjustable power consumption unit, which may correspond to the electrolyzing device. The connection to the same PoC allows coordination of the grid supporting actions.

Adjustment of power consumption of the electrolyzing plant can be achieved by controlling a converted power of the at least one electric converter. Generally, the electrolyzing plant may have one or more electric converters, which may operate at least partially in parallel in order to provide the DC electrolyzing voltage. However in a specific embodiment, at least one of the electrolyzing devices may comprise one or more electric converters in order to provide the DC electrolyzing voltage for this specific electrolyzing device. Especially, each electrolyzing device comprises at least one electric converter for its power supply. In this regard, easy and independent control of the consumed power of a specific one of the electrolyzing devices can be achieved.

The operating status of the electrolyzing plant may include specific device operating statuses allocated to any of the at least two electrolyzing devices. The device operating statuses need not be equal; rather, they may differ from each other, for instance, depending on individual characteristics such as aging, efficiency, rated power and/or the like. In this regard, it is, for example, possible to increase the power consumption by increasing the number and/or the power of specific electrolyzing devices having a low efficiency, whereas it is possible to reduce the power consumption by increasing the number and/or the power of electrolyzing devices having a high efficiency.

As a result, a centralized coordination of the at least two electrolyzing devices, especially multiple electrolyzing devices, can be achieved. The invention especially focuses on the aspect of frequency stabilizing measures, namely, limited frequency sensitivity modes (LFSM) for over-frequency and/or under-frequency.

The invention further considers that an excess of electric energy in the electric power network may lead to increasing of the frequency of the alternating voltage of the electric power network, whereas a lack of electric energy causes decreasing of the frequency. Therefore, if an excess of energy is present in the electric power network, increasing of energy consumption may counteract the tendency of an increase of the basic frequency. Rather, when a lack of energy is present in the electric power network, reduction of energy consumption may counteract the tendency of a decrease of the basic frequency. Therefore, controlling of energy consumption at the consumer site may support stability of the basic frequency of the alternating voltage of the electric power network.

In this regard, the invention considers that electrolyzing plants usually may establish a great power consumption. The invention is further directed to the consideration that the electrolyzing plant usually consists of at least two electrolyzing devices, especially, the electrolyzing plant may comprise a plurality of electrolyzing devices. A further consideration deals with the fact that the electrolyzing devices may be controlled independently so that the electrolyzing devices need not operate at the same device operating point. By use of the apparatus, it is possible to operate each of the electrolyzing devices independently at the specific device operating status so that, by adjusting the power consumption of each of the electrolyzing devices in a specific way, it is possible to adjust the power consumption of the whole electrolyzing plant. In this regard, the electrolyzing plant can be used to stabilize the electric power network, especially, stabilizing the frequency of its alternating voltage at a predetermined rated value.

The electrolyzing plant has at least one electric converter, which has an AC-side, which may be configured to be connected with the electric power network at the connection point, and has a DC-side which may be connected with at least one of the electrolyzing devices. In a preferred embodiment, each electrolyzing device may comprise its own electric converter, wherein the AC-sides of each of the electric converters are electrically configured to be connected with the point of connection. Their DC-sides may be configured to be connected with the respective electrolyzing mechanisms comprising the electrolyzing cells. In a specific embodiment, it may be possible that the electrolyzing plant has only one electric converter, which couples the connection point with a DC-bus bar, wherein the electrolyzing devices are electrically coupled with the DC-bus bar. However, the electric converter may include one or more converter modules, wherein each of the converter modules may be configured to provide a specific energy conversion. The converter modules may be connected with each other in parallel. The electrolyzing plant has the point of connection, which is configured to be connected with the electric power network. The point of connection is preferably adapted for a single phase or a multiphase-alternating voltage of the electric power network.

The at least one electric converter is configured to operate in a rectifying modus at least during an intended electrolyzing operation of the electrolyzing plant. The intended electrolyzing operation of the electrolyzing plant, especially, includes that the electrolyzing plant consumes a specific amount of electric energy in order to produce electrolyzing products such as for instance, hydrogen and oxygen by electrolyzing of water. The intended electrolyzing operation differs from an off-status of the electrolyzing plant in which no electrolyzed products are provided.

The electrolyzing plant also has at least one sensor, which is configured to detect the basic frequency of the alternating voltage. The sensor provides a sensor signal depending on the detected value of the basic frequency. The sensor signal is compared with predetermined frequency range, which may be comprise a reference frequency of the alternating voltage of the electric power network.

The inventive method can be provided by the inventive apparatus, which is configured to provide the respective method steps. The apparatus may be configured to be connected with the at least one electric converter and the sensor. Moreover, the control apparatus may be configured to be connected with a control station of the electrolyzing plant and/or a control center of the electric power network. The sensor signal may be an analog signal or a digital signal.

Comparing can be provided by the apparatus, which may have, for this purpose, a comparing portion. The comparing portion may be a component of the apparatus or at least of the electrolyzing plant, especially, of the at least one electrolyzing device. The apparatus may provide the comparing result. For comparing, the sensor signal may be processed such that a rms (route mean square) value, an amplitude value, an average value or the like may be the result.

The apparatus for controlling the electrolyzing plant may be an electronic apparatus, a control station, or the like. The apparatus may comprise an electric hardware circuitry in order to provide the required functionality. Moreover, the apparatus may also comprise a programmable computer, which is configured to provide at least partially the required functionality. Also, a combination of a hardware circuitry and a programmable computer may be provided.

Since usually a fast action is desired in order to support the grid from collapsing, complicated measures may be applied in electrolyzing plant, which may include high ramp-rates for adjusting the at least two electrolyzing devices. Therefore, the grid operator may require load change according to the frequency deviation. The sensor may detect the basic frequency anywhere in the electrolyzing plant, where the alternating voltage or a respective transformed voltage is available. A detection of a frequency event is established by comparison of one or several of respective sensor signals of the frequency sensor with the predetermined frequency range. Also, a phase jump of the basic frequency may be detected if such a detection is implemented. Threshold values, which may be defined by the upper frequency value and the lower frequency value, may be stored within a control system and, especially continuously, compared with the measured signals. If the frequency band is left because of under-frequency or over-frequency, different modes in the electrolyzing plant may be activated: Depending on the rate of change of frequency (RoCoF), which also may have a separate limitation, a fast load change may be desired. A limitation for the rate of change may be, for example, of about $\pm 4$ Hz/s. A rated nominal frequency value of the alternating voltage may be, for example, 50 Hz, 60 Hz, or the like. Referring to the rated nominal frequency of 50 Hz, for instance, the upper frequency value may be 50,2 Hz, whereas the lower frequency value may be 49,8 Hz.

Generally, the invention may be executed at least partially automatically.

It may also be possible to shut down all or individual ones of the at least two electrolyzing devices in order to achieve the required load change considering the technical requirements of the operation of the electrolyzing devices. The device operating statuses of the respective electrolyzing devices may be adjusted into a standby state that allows for fast or immediate resumption. This standby state may include activation of a polarization voltage source, which may prevent the electrolyzing cells from operating in an undesired fuel cell modus, for example because the DC voltage of a specific electrolyzing cell drops below the Nernst voltage. This status may also include an ongoing temperature regulation and continued readiness of all control elements of the electrolysis to allow for a fast restart (hot stand-by).

The sensor signal may be hardwired or connected directly by fiber optics from source to destination in order to achieve fast reaction time. Depending on the overall control structure, the measured frequency can also be directly sent to a faster control level by overriding a standard control hierarchy. Optionally, the apparatus for controlling the electrolyzing plant can also be used to achieve the technically fastest possible plant reaction. In this case, the adjustment of operating status can be send from the electric converter to the apparatus in order to adjust process control operating statuses accordingly. In this regard, it may be possible that the at least one sensor is arranged at the electric converter, especially, when the electric converter is subjected to an alternating voltage derived from the alternating voltage at the point of connection distributed by the internal power network. It is preferred to operate this control loop with a high cycling time, for instance, lower than about 100 ms, or even 10ms.

In an event, when the electrolyzing plant trips due to a frequency event, especially, if the basic frequency leaves the predetermined frequency range, the electrolyzing plant may go into a standby status that enables fast restart after event clearance. Measures to reduce ageing such as polarization rectifier operation may be applied. Auxiliary systems required for standby that may have disconnected, may be restarted either if they are disconnected, if fast enough, or shall be buffered by an UPS in such an event. The standby status may include activation of a polarization voltage source, which may prevent the electrolysis voltage of the electrolyzing cells from dropping below the Nernst voltage, especially, including a defined safety margin. This measure may be applied to prevent the electrolysis from entering into a harmful fuel-cell modus.

In addition, a compressor system may enter the recycling / zero mass flow modus that enables fast restart after fault clearance. In order to prevent a loss of electric power supply, if the electrolyzing plant should trip, additional consumers such as chopper resistors can be activated to match the electrolyzing plant's required power consumption, for example, with an accuracy of about $\pm$ 10%. During restart of the electrolyzing plant, these additional loads could be switched off in a way that matches the ramp-rate of the electrolyzing plant and possibly additional systems. The power adjustment between these systems might occur continuously, possibly with the support of smoothing power storage systems, or with discrete steps, for example, if the additional load can only be switched on/off without the possibility to control the power supply, for example, due to economic reasons a converter system might not be applied.

According to an exemplary embodiment, it is especially proposed that an on-load-tap-changer (OLTC) is adjusted depending on comparing. In one exemplary embodiment, the OLTC may comprise a semi-conductor-based device configured to provide the same function. This feature may be especially used in the event when the basic frequency is higher than the upper frequency value that is the event of over-frequency. However, application of this feature is not limited to be used in the event of over-frequency only. Generally, it may be also considered in the event of under-frequency if applicable. The on-load-tap-changer may be a portion of a transformer. The transformer may be a component of the electrolyzing plant. However, the transformer may be a component of the electrolyzing device. Especially, each electrolyzing device may have a respective transformer. The on-load-tap-changer allows fast adjustment of the consumed power. Especially in the event of over-frequency, it is possible to increase the consumed power very fast. The apparatus of the invention may control the on-load-tap-changer.

In addition, a hard-wired or fiber optic signal may be used in order to initiate a fast operation of the on-load-tap-changer within the electrolyzing plant. This may need to operate in order to provide a sufficient high voltage to the electrolyzing device to be able to reach the new device operating status. If desired by the operator, the OLTC may already be adjusted at the beginning of the event even if a possibly sufficient voltage margin would be available to increase and/or decrease the power input. Since at the beginning of such event, it may be unknown how much power adjustment will be required, respective settings may be defined in a way to enable the full power adjustment up to fmax or the maximum of the currently achievable consumed power without the disadvantage of delay by OLTC operations, or fmin or the minimum currently achievable consumed power respectively.

Additional margins and correction factors may be applied to these reference points and these calculations may be done in real-time or by optimization algorithms, which regularly update the pre-defined measures, for example, based on a 15 minute power consumption profile. If the downstream process of the electrolyzing plant was not able to take the full resulting gas production, measures to store the excessive gas, to blow it at least partially out and/or possibly burn it, or to use it to feed additional systems, could be applied. These settings can also be applied and defined during commissioning and stored for each electrolyzing device directly. There is no regulation optimization, but instead different electrolysis technologies (such as, for instance, PEM, anyway are setup for higher reaction and/or ramp-rates than a parallel alkaline electrolysis technologies. The optimization during operation could then be a next step.

According to yet another exemplary embodiment, it is especially proposed that a variation of a value of the basic frequency is monitored at least when the value of the basic frequency is in the predetermined frequency range, and, dependent on a direction of the variation, storing of the operation, and especially, adjusting the on-load-tap-changer, is prepared. Monitoring may be also provided or continued when the value of the basic frequency has left the predetermined frequency range. A required load change $\Delta P$, in order to actively support stability of the basic frequency, may be calculated, especially by the apparatus of the invention, the control station, the control apparatus of the electric converter, or the like. The required load change $\Delta P$ may be provided as an offset of the operating status of the respective electrolyzing device. This may be provided for all of the at least two electrolyzing devices. In this regard, a hierarchy of the apparatus may be defined before starting the electrolyzing plant so that always a clearly defined operating status is available. Especially, load changes by any operator may be partially inhibited or delayed during such an event if they are contrary to the grid requirements. The respective operator may be informed about this measure, for example, on a human machine interface (HMI). Exceptions from this rule may include load adjustments necessary for plant-safety, for grid safety, for example, load shedding, voltage regulation, and/or the like. A safety shut-down may be a superior action and as such shall be carried out with the highest priority.

According to another exemplary embodiment, it is especially proposed that, dependent on comparing, a consumed power of at least one of the at least two electrolyzing devices is adjusted. In this regard, a ramp-rate for providing adjustments to the respective one of the at least two electrolyzing devices may be considered. For instance, the ramp-rate itself may be at least partially adjusted or replaced by an event ramp-rate in order to achieve a fast reaction of the electrolyzing plant. Generally, the ramp-rate may serve to affect a characteristic with regard to adjustment of the respective electrolyzing device. According to the ramp-rate, a velocity of adjustment of the device operating status can be defined. For instance, if the required load change is faster than the normal load ramp limitation of the respective electrolyzing device and if the electrolyzing plant overall can physically deal with the required ramp rates, a fast load change modus can be activated, in order to enable extraordinarily high load change limit, for example, by bypassing or partially bypassing existing ramp limitations, for example, by advanced control or directly acting functions, or increasing ramp limitations to higher limits, for example, dedicated to active frequency support.

According to a further exemplary embodiment, it is especially proposed that, dependent on comparing, operation of a peripheral support device of the respective one of the at least two electrolyzing devices is at least partially adjusted. This may, for example, be relevant for functions such as product gas mass flow, especially, with regard to 02 and/or H2, compression systems for O2 and/or H2, product gas control valve position for O2 and/or H2, blow-off valve position for O2 and/or H2, product gas pressure control for O2 and/or H2, cooling water control valve, cooling system and/or the like. It should be noted that advanced control functions may be formula or 1D-/ multidimensional characteristics based on known or expected process behavior such as simulations, calculations, and/or the like.

According to another exemplary embodiment, it is especially proposed that a power variation of the electrolyzing plant is determined, and an event operating status for the electrolyzing plant is determined depending on the determined power variation. The determined power variation allows finding an event operating modus so that the operation of the electrolyzing plant can be reliably and fast adjusted with regard to the event.

Moreover, it is especially proposed that, in the event that the basic frequency has left the predetermined frequency range, a current control action of a control station of the electrolyzing plant is at least partially blocked. This ensures that a necessary adjustment of the electrolyzing plant can be provided.

Furthermore, it is especially proposed that the method is at least partially executed by a control apparatus of the at least one electric converter. In this regard, the reaction time of the electrolyzing plant can be further increased because time-consuming instances of controlling the electrolyzing plant can be avoided or bypassed.

According to another exemplary embodiment, it is especially proposed that the operation of the respective one of the at least two electrolyzing devices is resumed only dependent on a release signal provided by a control station of the electrolyzing plant or by a control center of the electric power network. The release signal may be provided automatically or by an operator of the control station. Safety can be improved. However, if the electrolyzing plant has tripped or any of the electrolyzing devices has ramped-down to zero, a new ramp-up process may be started in order to resume the electrolyzing process.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Advantages and effects of the inventive method also apply to the inventive control apparatus and the inventive electrolyzing plant and vice versa. Therefore, method features may also be expressed as apparatus features and vice versa.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:

FIG 1 a schematic diagram showing a first embodiment of an electrolyzing plant;

FIG 2 a schematic diagram showing a normalized reaction of the power supply dependent on a basic frequency of an alternating voltage of an electric power network; and

FIG 3 a schematic flow chart explaining an embodiment of the invention.

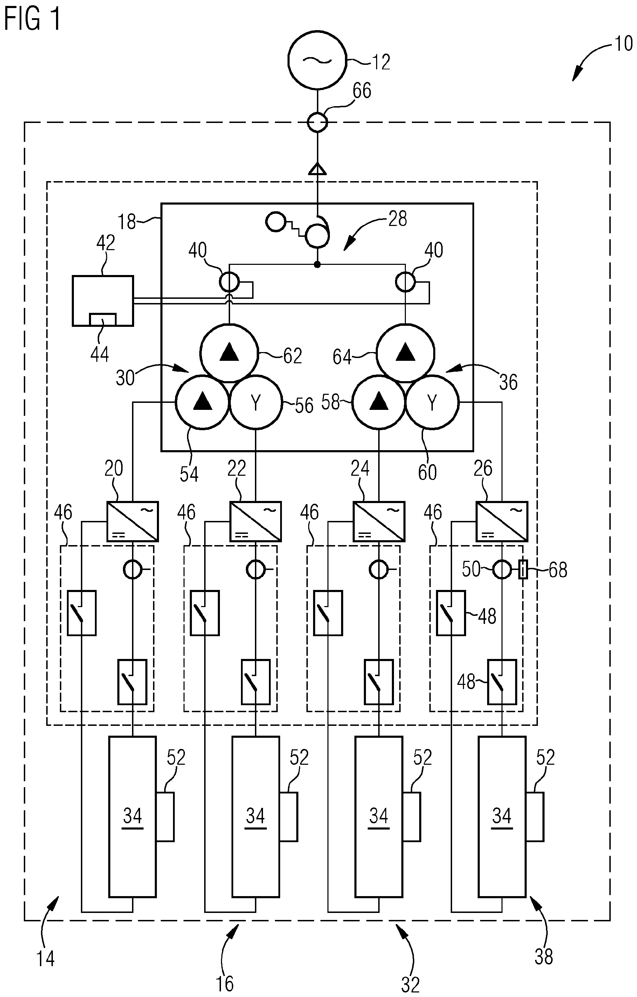

Fig. 1 shows a schematic diagram of an embodiment of an electrolyzing plant 10. The electrolyzing plant 10 has plural electrolyzing devices 14, 16, 32, 38, which are configured to electrolyze water by providing an electrolyzing process.

Compounds produced by the electrolyzing process are hydrogen and oxygen. Each of the electrolyzing devices 14, 16, 32, 38 has an electrolyzing mechanism 34, which comprises a plurality of electrolyzing cells (not shown), which are electrically connected with each other in series. However, in other embodiments, it may be possible to have an electric connection between the electrolyzing cells of the electrolyzing mechanism 34 at least partially in parallel. The electrolyzing cells are usually stacked in a respective one of the electrolyzing mechanisms 34. Not shown in the figures is that each electrolyzing cell is connected with a water source of the electrolyzing plant 10, on the one hand, and is further connected with respective piping for discharging the electrolyzed products, namely, hydrogen and oxygen. The piping also belongs to the electrolyzing plant 10. In the present embodiment, it is proposed that the electrolyzing plant 10 has respective tanks (not shown) for storing hydrogen and oxygen. However, in alternative embodiments the piping may be at least partially connected with external consumers of hydrogen and/or oxygen. The external consumers may be, for instance, a hydrogen pipeline, a steel production plant or the like. These components are referred to as peripheral support device 46, which is provided for each of the electrolyzing devices 14, 16, 32, 38.

The electrolyzing plant 10 has a PoC 66, which is connected with the electric power network 12 in order to provide the electrolyzing plant 10 with electric energy. The electric power network 12 provides a three phase alternating voltage having a basic frequency of about 50 Hz. In alternative embodiments, the basic frequency may be different, for example, about 60 Hz.

The electrolyzing plant 10 further comprises two transformers 30, 36, wherein each of the transformers 30, 36 has a respective primary winding 62, 64, which is configured to be subjected to the three phase alternating voltage of the electric power network 12. For this purpose, each of the primary windings 62, 64 is connected with the PoC 66 via an autotransformer equipped with an on-load-tap-changer 28 and respective frequency sensors 40. The frequency sensors 40 are connected with an apparatus 42 for controlling an electrolyzing plant 10. In an alternative embodiment, the frequency sensors 40 may be integrated into one or more of the electric converters 20, 22, 24, 26. The apparatus 42 forms a portion of a control station of the electrolyzing plant 10 (not shown). Each of the transformers 30, 36 has two secondary windings 54, 56, 58, 60. Each of the electrolyzing devices 14, 16, 32, 38 is connected with a respective one of the secondary windings 54, 56, 58, 60. Moreover, in the present embodiment, the electrolyzing devices 16 have substantially the same design. The apparatus 42 is also connected with the electrolyzing devices 14, 16, 32, 38, the sensors 40, and the electric converters 20, 22, 24, 26. The apparatus 40 is configured to control a power consumption of the electrolyzing devices 14, 16, 32, 38, especially, by controlling a converted power of the electric converters 20, 22, 24, 26.

Each of the electrolyzing devices 14, 16, 32, 38 has a respective electric converter 20, 22, 24, 26. Each of the electric converters 20, 22, 24, 26 has a DC-side, which is electrically connected with a respective the electrolyzing mechanism 34 of the respective electrolyzing device 14, 16, 32, 38 via respective DC switches 48. The electric converters 20, 22, 24, 26 also have an AC-side connected with a respective one of the secondary windings 54, 56, 58, 60.

The electric converters 20, 22, 24, 26 are configured to convert the alternating voltage at their AC-sides into a DC electrolyzing voltage for supplying the respective electrolyzing device 14, 16, 32, 38, especially, the respective electrolyzing mechanism 34, with electric energy of the electric power network 12. The value of the DC electrolyzing voltage may depend on at least the number of the electrolyzing cells connected in series and their design.

The frequency sensor 40 is configured to detect the basic frequency of the alternating voltage. The sensor 40 provides a respective sensor signal, which is communicated to the apparatus 42, especially, a comparing circuit 44. The comparing circuit 44 is configured to compare the sensor signal with a predetermined frequency range 76. The basic frequency is an electric quantity, which is indicative for a specific network condition, namely, a stability of the electric power network 12. This apparatus 42 is configured to continuously calculate a power adjustment based on the detected frequency and provide this as a setpoint to the electric converters 20, 22, 24, 26, and especially to the electrolyzing devices as well.

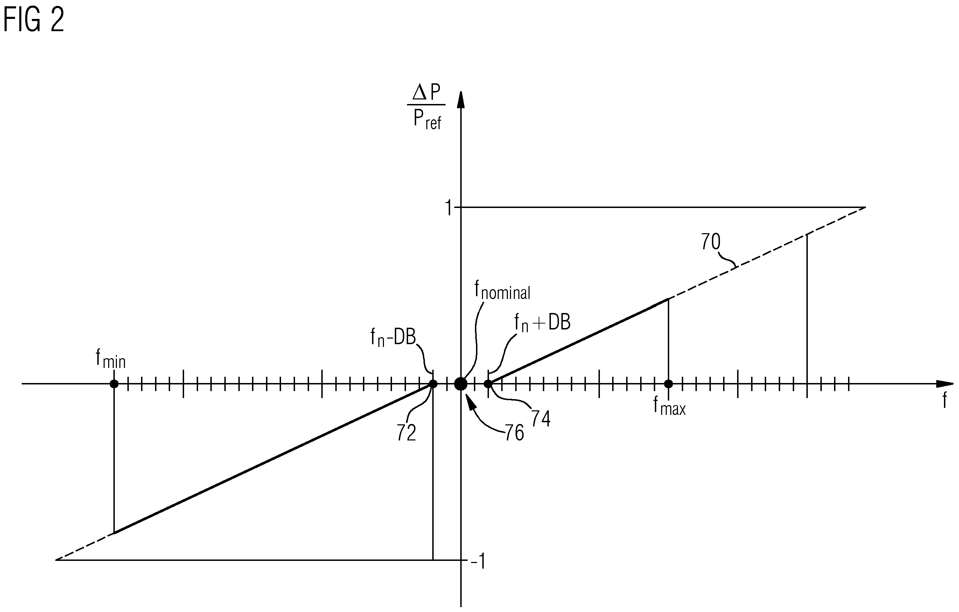

FIG 2 shows a schematic diagram, wherein an abscissa is allocated to the basic frequency f_n of the alternating voltage of the electric power network 12. An ordinate is allocated to a normalized power ΔP/P_ref supplied from the electric power network 12 to the electrolyzing plant 10. A graph 70 shows the dependency. FIG 2 shows a lower frequency value 72 and an upper frequency value 74 defining a predetermined frequency range 76. As far as the detected basic frequency belongs to the predetermined frequency range 76, no action with regard to supporting stability of the electric power network 12 is necessary. The electrolyzing plant 10 can be operated locally substantially independent from considering the situation of the electric power network 12. The graph 70 may be at least partially defined by a grid operator or be based on a grid code requirement.

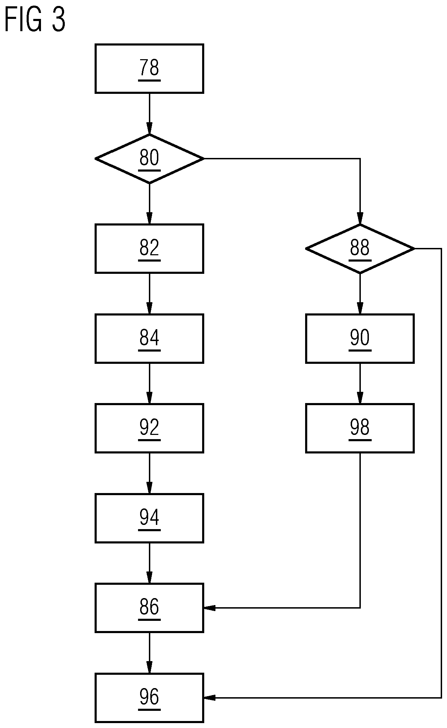

FIG 3 shows a schematic flow chart for a method for controlling the electrolyzing plant 10 according to FIG 1. In a first step 78, the basic frequency of the alternating voltage is sensed by use of the frequency sensor 40. At 80, the sensed frequency is compared with the predetermined frequency range 76 for the basic frequency. The predetermined frequency range 76 is delimited by the upper frequency value 74 and the lower frequency value 72. In step 80, it is especially determined, whether the sensed frequency is higher than the upper frequency value 74. If this condition is valid, the invention proceeds with step 82.

In step 82, an operating status of the electrolyzing devices 14, 16, 32, 38 is stored, in order to allow the operation of the respective electrolyzing devices 14, 16, 32, 38 being resumed, according to the stored operating status, if the basic frequency reaches the predetermined frequency range 76 again. In this regard, an over-frequency condition of the alternating voltage of the electric power network 12 is determined. The operating status comprises in the present embodiment parameters, specific operating values connected with a present specific setpoint.

Then, the method proceeds with step 84, wherein the on-load-tap-changer 28 is adjusted depending on the comparison. In the present event of over-frequency, adjustment of the on-load-tap-changer 28 is provided such that energy consumption of the electrolyzing plant 10 is increased, which translates of an increase of the input voltage for the electric converters 20, 22, 24 and 26. In an alternative embodiment, also any upstream OLTC can perform this action, such as, for instance, the one, which is part of the grid transformer at the PoC 66.

The method proceeds with step 92, wherein, especially, a power variation of the electrolyzing plant is determined in order to support stabilization of the electric power network 12, and an event operating status for the electrolyzing plant 10 is determined depending on the determined power variation. The event operating status may comprise respective device operating statuses for the electrolyzing devices 14, 16, 32, 38. The apparatus 42 provides a respective control signal to the electric converters 20, 22, 24, 26. Especially, event ramp-rates are calculated based on the reaction determined by Fig 2. The device operating statuses include operation conditions for peripheral support devices 52. The method proceeds with step 94, wherein the event ramp-rates are applied to the electrolyzing devices 14, 16, 32, 38, in order to achieve a fast increase of the consumed power and correct reaction of the overall electrolysis system specifically including the process side and down-stream devices. Generally, it is possible in alternative embodiments that event ramp-rates may be calculated independently for each to the electrolyzing devices 14, 16, 32, 38.

If the production of hydrogen and oxygen is limited, it may be provided that an electrolyzing device having a low efficiency may replace an electrolyzing device having a high efficiency. Moreover, further peripheral support devices 52 may be activated or their power consumption may be increased, for example, a chopper resistance may be additionally activated and/or the like in order to meet the required power adjustment at the point of connection.

The method proceeds with step 86, wherein in step 86, it is established that the basic frequency reaches the predetermined frequency range 76 again. Especially, the frequency is constantly monitored and the electrolyzing process is continuously adjusted as long as step 86 is not reached. Therefore, in step 86, operation of the electrolyzing plant 10 according to the stored operating status is resumed. The method terminates at 96. Optionally, in another step, a check is conducted to see if the stored values can be used directly. Maybe, for example, during the event some filling levels have changed or any other parameter reached a threshold which it did not have before the event. In this case, the reaction of the electrolyzing plant would possibly need to be adjusted, considering the new situation.

If in step 80 is established, that a basic frequency or the sensed frequency, respectively, is not higher than the upper frequency value 74, the method branches to 88.

At 88, the sensed frequency is compared with the lower frequency value 72. If the sensed frequency is higher than the low frequency value 72, no action is required and the method proceeds to step 96, wherein terminating the method because no action is necessary.

If at 88, the comparison results in the sensed frequency being lower than the lower frequency value 72, the method proceeds with step 90.

At step 90, the condition of under-frequency of the alternating voltage of the electric power network 12 is determined. Similar to step 82, the operating status of the electrolyzing devices 14, 16, 32, 38 is stored. The method proceeds with step 98.

At step 98, the on-load-tab-changer 28 is adjusted correspondingly in order to reduce power consumption of the electrolyzing plant 10. Also, power consumption of the electrolyzing devices 14, 16, 32, 38 may be at least partially reduced. For this purpose, a respective event operating status is calculated including device operating statuses, especially respective ramp-rates.

In one alternative embodiment, it may be provided that at least one of the electrolyzing devices 14, 16, 32, 38 may be shut off. The shutoff may include a standby modus, wherein the respective electrolyzing device is maintained in a specific modus, where substantially no electric energy is required for gas production, but all control systems remain fully operational and a fuel cell mode of the electrolyzing cells is prevented from and optionally the temperature of the electrolysis regulated. In this regard, the respective electrolyzing device may be resumed very fast, if the respective event is over.

Then, the method proceeds with step 86 if the event is over as detailed above and terminates at 96. The method can be repeated anytime.

Generally, a required load change due to the required support of stability of the electric power network 12 may be calculated by a computer of the apparatus 42 and may be added as an offset to a current operating status. During an event, changes regarding the operating status caused by an operator are at least partially inhibited or delayed during this event, especially, if they are contrary to the required support action. The operator may be informed about this measure. However, any adjustment related to the safety of the electrolyzing plant 10, or for the safety of the electric power network 12, for example, load shedding, and/or voltage regulation may be excluded. For example, a safety shut-down is always superior action and is carried out in the present embodiment with the highest priority, independent from the requirement of supporting stability of the electric power network 12. Also, ongoing load changes with regard to the electrolyzing devices are paused for the duration of the event, especially, if they do not comply with the respective requirements in order to increase or decrease the load.

With regard to FIG 2, the condition for under-frequency may be derived from the following equation:

$$\frac{dP}{P_{ref}} = \frac{1}{droop} \cdot \frac{(f_{grid} - f_n - DB)}{f_n}$$

For the event of over-frequency, the following equation may be relevant:

$$\frac{dP}{P_{ref}} = \frac{1}{droop} \cdot \frac{(f_{grid} - f_n - DB)}{f_n}$$

The embodiments described above serve only for further explanation of the invention and shall not limit the scope.

**Claims**

1. A method for controlling an electrolyzing plant (10) having at least two electrolyzing devices (14, 16, 32, 38), especially configured to electrolyze water by providing an electrolyzing process, wherein the at least two electrolyzing devices (14, 16, 32, 38) perform the electrolyzing process in response to being subjected to a DC electrolyzing voltage, wherein the electrolyzing plant (10) is supplied with electric energy from an electric power network (12), wherein the electric power network (12) provides an alternating voltage having a basic frequency, wherein an AC side of at least one electric converter (20, 22, 24, 26) of the electrolyzing plant (10) is electrically connected with the electric power network (12) in order to be subjected to the alternating voltage, and a DC side of at least one electric converter (20, 22, 24, 26) provides the DC electrolyzing voltage in response to the AC side being subjected to the alternating voltage, wherein the basic frequency is sensed by a frequency sensor (40),
**characterized in that**
the sensed frequency is compared with a predetermined frequency range (76) for the basic frequency, wherein the predetermined frequency range (76) is delimited by an upper frequency value (74) and a lower frequency value (72) being smaller than the upper frequency value (74), and, depending on comparing, an operating status of at least one of the at least two electrolyzing devices (14, 16, 32, 38) is stored if the basic frequency leaves the predetermined frequency range (76), in order to allow the operation of the respective one of the at least two electrolyzing devices (14, 16, 32, 38) being resumed according to the stored operating status if the basic frequency reaches the predetermined frequency range (76) again.

2. The method according to claim 1, **characterized in that** an on-load-tap-changer (28) is adjusted depending on comparing.

3. The method according to anyone of the preceding claims, **characterized in that** the operating status includes a standby state that allows for fast or immediate resumption of the at least one electrolyzing device,

4. The method according to anyone of the preceding claims, **characterized in that** a variation of a value of the basic frequency is monitored at least when the value of the basic frequency is in the predetermined frequency range (76), and, dependent on a direction of the variation, storing of the operation, and especially, adjusting the on-load-tap-changer (28), is prepared.

5. The method according to anyone of the preceding claims, **characterized in that**, dependent on comparing, a consumed power of at least one of the at least two electrolyzing devices (14, 16, 32, 38) is adjusted.

6. The method according to anyone of the preceding claims, **characterized in that**, dependent on comparing, operation of a peripheral support device (52) of the respective one of the at least two electrolyzing devices (14, 16, 32, 38) is at least partially adjusted.

7. The method according to anyone of the preceding claims, **characterized in that** a power variation of the electrolyzing plant (10) is determined, and an event operating status for the electrolyzing plant (10) is determined depending on the determined power variation.

8. The method according to anyone of the preceding claims, **characterized in that**, in the event that the basic frequency has left the predetermined frequency range (76), a current control action of a control station of the electrolyzing plant (10) is at least partially blocked.

9. The method according to anyone of the preceding claims, **characterized in that** the method is at least partially executed by a control apparatus (68) of the at least one electric converter (20, 22, 24, 26).

10. The method according to anyone of the preceding claims, **characterized in that** the operation of the respective one of the at least two electrolyzing devices (14, 16, 32, 38) is resumed only dependent on a release signal provided by a control station of the electrolyzing plant (10) or by a control center of the electric power network (12).

11. An apparatus (42) for controlling an electrolyzing plant (10) having at least two electrolyzing devices (14, 16, 32, 38), especially configured to electrolyze water by providing an electrolyzing process, wherein the at least two electrolyzing devices (14, 16, 32, 38) perform the electrolyzing process in response to being subjected to a DC electrolyzing voltage, wherein the electrolyzing plant (10) is supplied with electric energy from an electric power network (12), wherein the electric power network (12) provides an alternating voltage having a basic frequency, wherein the apparatus (42) is configured to be connected with at least one electric converter (20, 22, 24, 26) of the electrolyzing plant (10), wherein the at least one electric converter (20, 22, 24, 26) has an AC side which is electrically connected with the electric power network (12) in order to be subjected to the alternating voltage, and a DC side which provides the DC electrolyzing voltage in response to the AC side being subjected to the alternating voltage, wherein the apparatus (42) is configured to be connected with a frequency sensor (40) for sensing the basic frequency, **characterized in that** the apparatus (42) is configured to

- compare the sensed frequency with a predetermined frequency range (76) for the basic frequency, wherein the predetermined frequency range (76) is delimited by an upper frequency value (74) and a lower frequency value (72) being smaller than the upper frequency value (74), and,
- depending on comparing, store an operating status of at least one of the at least two electrolyzing devices (14, 16, 32, 38) if the basic frequency leaves the predetermined frequency range (76), in order to allow the operation of the respective one of the at least two electrolyzing devices (14, 16, 32, 38) being resumed according to the stored operating status if the basic frequency reaches the predetermined frequency range (76) again.

12. An electrolyzing plant (10) configured to be supplied with electric energy from an electric power network (12), wherein the electric power network (12) provides an alternating voltage having a basic frequency, wherein the electrolyzing plant (10) has

- at least two electrolyzing devices (14, 16, 32, 38), especially configured to electrolyze water by providing an electrolyzing process, wherein the at least two electrolyzing devices (14, 16, 32, 38) perform the electrolyzing process in response to being subjected to a DC electrolyzing voltage, wherein an AC side of at least one electric converter (20, 22, 24, 26) of the electrolyzing plant (10) is electrically connected with the electric power network (12) in order to be subjected to the alternating voltage, and a DC side of at least one electric converter (20, 22, 24, 26) provides the DC electrolyzing voltage in response to the AC side being subjected to the alternating voltage,
- at least one frequency sensor (40) configured to sense the basic frequency,

**characterized in that** the electrolyzing plant (10) is configured to

- compare the sensed frequency with a predetermined frequency range (76) for the basic frequency, wherein the predetermined frequency range (76) is delimited by an upper frequency value (74) and a lower frequency value (72) being smaller than the upper frequency value (74), and,
- depending on comparing, store an operating status of at least one of the at least two electrolyzing devices (14, 16, 32, 38) if the basic frequency leaves the predetermined frequency range (76), in order to allow the operation of the respective one of the at least two electrolyzing devices (14, 16, 32, 38) being resumed according to the stored operating status if the basic frequency reaches the predetermined frequency range (76) again.

# FIG 1

FIG 2

EP 4 738 635 A1

FIG 3

EUROPEAN SEARCH REPORT

**Application Number**

EP 24 21 0043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAHA PANKAJ ET AL: "Enabling LVRT Compliance of Electrolyzer Systems Using Energy Storage Technologies", BATTERIES, vol. 9, no. 11, 24 October 2023 (2023-10-24), page 527, XP093212586, Basel ISSN: 2313-0105, DOI: 10.3390/batteries9110527 * the whole document * | 1,4-7, 9-12 | INV. H02J1/14 C25B1/04 C25B15/02 H02J3/14 H02J4/00 H02J15/00 H02J3/00 |
| Y | US 2024/263330 A1 (PANCHULA ALEX [US] ET AL) 8 August 2024 (2024-08-08) * paragraphs [0010] - [0046] * | 1-12 | |
| Y | BOEMER JENS C ET AL: "Response of wind power park modules in distribution systems to transmission network faults during reverse power flows", IET RENEWABLE POWER GENERATION, THE INSTITUTION OF ENGINEERING AND TECHNOLOGY, MICHAEL FARADAY HOUSE, SIX HILLS WAY, STEVENAGE, HERTS. SG1 2AY, UK, vol. 9, no. 8, 1 November 2015 (2015-11-01), pages 1033-1042, XP006054236, ISSN: 1752-1416, DOI: 10.1049/IET-RPG.2014.0190 * Chapters 1 to 3 * | 1-12 | |

**TECHNICAL FIELDS SEARCHED (IPC)**

H02J
C25B

The present search report has been drawn up for all claims

| Place of search | Date of completion of the search | Examiner |
|---|---|---|
| Munich | 20 March 2025 | Telega, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 738 635 A1**

**ANNEX TO THE EUROPEAN SEARCH REPORT
ON EUROPEAN PATENT APPLICATION NO.**                    EP 24 21 0043

This annex lists the patent family members relating to the patent documents cited in  the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| US 2024263330 A1 | 08-08-2024 | AU 2022397305 A1 | 23-05-2024 |
| | | EP 4437164 A1 | 02-10-2024 |
| | | US 2024263330 A1 | 08-08-2024 |
| | | WO 2023097028 A1 | 01-06-2023 |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• DE 19729529 C1